# EUROPEAN PATENT APPLICATION

(11) **EP 1 722 469 A1**
(43) Date of publication of application: **15.11.2006**
(21) Application number: 05719571.1
(22) Date of filing: 21.02.2005
(51) Int. Cl.: H02P 21/00

(54) **MOTOR-DRIVEN POWER STEERING DEVICE CONTROL DEVICE**

(30) Priority: 23.02.2004 JP 2004046798
(71) Applicant: NSK LTD., Shinagawa-ku, Tokyo 141-8560 (JP); NSK Steering Systems Co. Ltd, Shinagawa-ku, Tokyo 141-8560 (JP)
(72) Inventor: KOBAYASHI, Hideyuki, NSK STEERING SYSTEMS CO., LTD, Maebashi-Shi, Gunma 3710845 (JP)
(74) Representative: Hooiveld, Arjen Jan Winfried
(86) International application number: PCT/JP2005/003228
(87) International publication number: WO 2005/081397

(57) **Abstract**

The present invention provides a control apparatus of a electric power steering apparatus which can suppress a vibration and a noise of a motor caused by a torque ripple which is generated at a tie of applying a field-weakening control to the motor or on the basis of a motor circulating current. Accordingly, the control apparatus actually measures a relation between a basic correcting current and a rotor position which can suppress the torque ripple generated at a time of applying the field-weakening control or the torque ripple based on the motor circulating current, previously, and adds a correcting current which is regulated by taking into consideration a magnitude of a weak field current of a correcting current, a magnitude of an angular velocity of the rotor or an electrical angle of the circulating current with respect to the basic correcting current, to an original current command value.

## Description

### Technical Field

The present invention relates to a control apparatus of an electric power steering apparatus, and more particularly to a control apparatus of an electric power steering apparatus suppressing a torque ripple of a motor output in the case of executing a field-weakening control or on the basis of a motor circulating current.

### Background Art

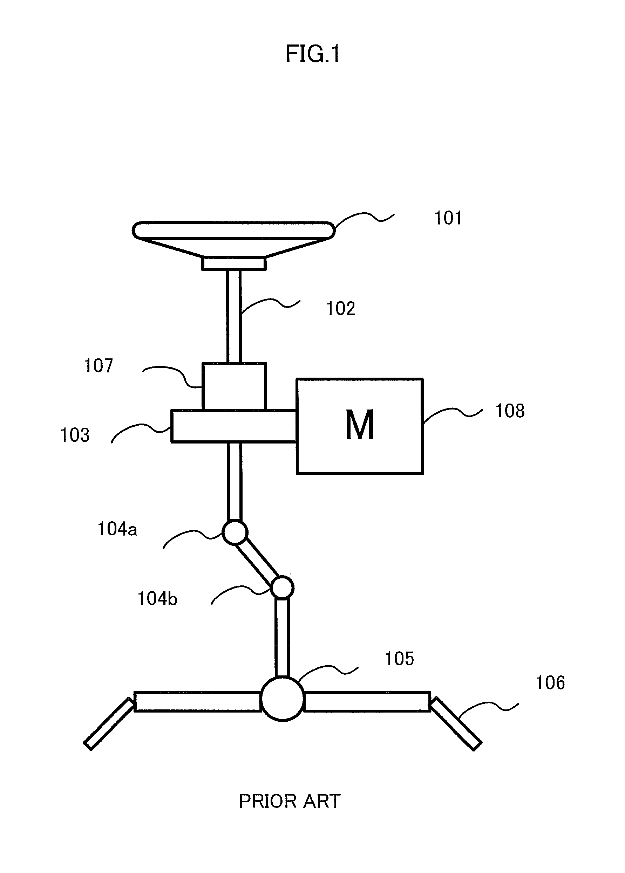

An electric power steering apparatus applying an assist force against a steering apparatus of a motor vehicle on the basis of a rotating force of a motor is structured such that the assist force is applied to a steering shaft or a rack shaft by applying a driving force of the motor by means of a transmission mechanism such as gears, a belt or the like via a speed reduction member. A description will be given of a general structure of the electric power steering apparatus mentioned above with reference to FIG. 1.

A column shaft 102 of a steering wheel 101 is coupled to a tie rod 106 of steered wheels via reduction gears 103, universal joints 104a and 104b and a pinion rack mechanism 105. The column shaft 102 is provided with a torque sensor 107 detecting a steering torque of the steering wheel 101, and a motor 108 assisting a steering force of the steering wheel 101 is coupled to the column shaft 102 via the reduction gears 103.

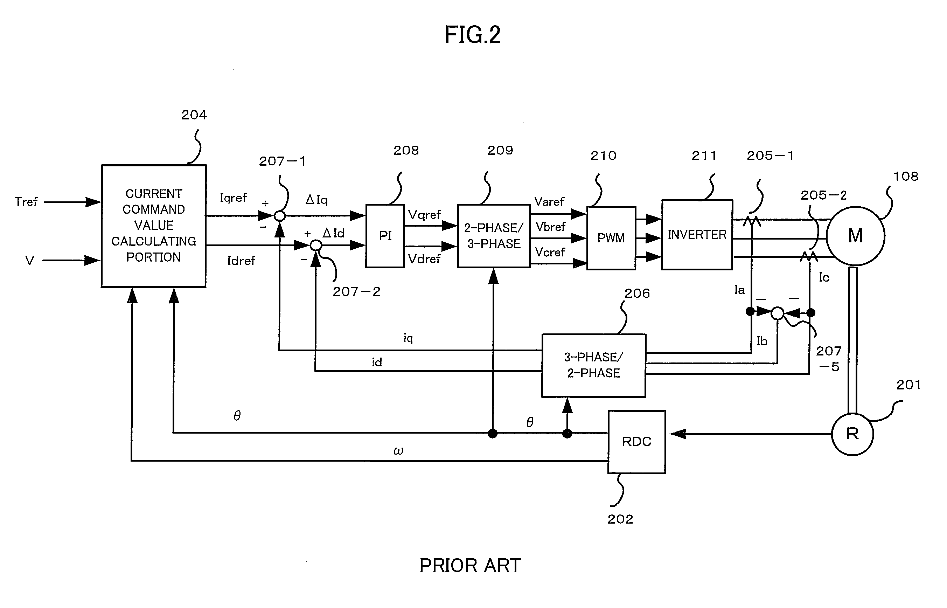

A description will be given of a control apparatus of the electric power steering apparatus mentioned above with reference to FIG. 2. A control method of the control apparatus is constituted, for example, by a 3-phase motor control using a feedback control and a vector control.

First, a steering torque Tref detected by a torque sensor 107 so as to be inputted, a vehicle speed V detected by a vehicle speed sensor (not shown), a rotor position θ and an angular velocity ω of a rotor which are mentioned below are inputted to a current command value calculating portion 204, and a q-axis current command value Iqref mainly controlling an output torque of the motor 108, and a d-axis current command value Idref mainly controlling a magnetic field of the motor 108 are calculated.

On the other hand, in order to execute the feedback control, it is necessary to detect motor currents Ia, Ib and Ic in respective phases. First, in order to respectively detect the a-phase current Ia and the c-phase current Ic, current detectors 205-1 and 205-2 are arranged in wirings between an inverter circuit 211 and the motor 108, and detect the currents Ia and Ic. Further, the b-phase current Ib is calculated as "Ib = - (Ia + Ic)" on the basis of the detected current Ia and Ic and a subtracting portion 207-5, by utilizing a relation of "Ia + Ib + Ic = 0".

Further, in order to detect the rotor position θ of the motor 108 and the angular velocity ω of the rotor for controlling the motor 108, a resolver 201 is coupled to the motor 108, and there is arranged a resolver digital conversion circuit (hereinafter, refer to as "RDC circuit") 202 detecting the rotor position θ and the angular velocity ω of the rotor from an output signal of the resolver 201.

It is necessary to convert the detected respective phase motor currents Ia, Ib and Ic into a d-axis current Id and a q-axis current Iq in correspondence to the vector control. In a three-phase/two-phase converting portion 206, they are converted into the d-axis current Id and the q-axis current Iq so as to be outputted on the basis of the input of the rotor position θ corresponding to the output of the RDC circuit 202 and the detected respective phase motor currents Ia, Ib and Ic.

Further, there is calculated respective deviations ΔIq and ΔId between the q-axis current command value Iqref and the d-axis current command value Idref mentioned above, and the converted q-axis current Iq and d-axis current Id, in subtracting portions 207-1 and 207-2. The deviations ΔIq and ΔId are inputted to a proportional integral control portion (a PI control portion) 208, and voltage command values Vqref and Vdref are outputted. Since the actual motor 108 is constituted by the three-phase motor, it is necessary to calculate three-phase voltage command values Varef, Vbref and Vcref from the voltage command values Vdref and Vqref expressed by the d-axis and the q-axis. Accordingly, the voltage command values Varef, Vbref and Vcref are calculated in a two-phase/three-phase converting portion 209 on the basis of the input of the d-axis voltage command value Vdref, the q-axis voltage command value Vqref and the rotor position θ corresponding to the output of the RDC circuit 202.

As one example, in the case that an inverter circuit 211 driving the motor 108 is PWM-controlled, respective phase PWM-control signals are outputted from a PWM control portion 210 on the basis of the input of the respective phase voltage command values Varef, Vbref and Vcref, and the inverter circuit 211 is PWM-controlled on the basis of the respective phase PWM-control signals.

The control method described above corresponds to the vector control using the d-axis current command value Idref and the q-axis current command value Iqref. In this case, the current command value commanded by the output torque of the motor 108 is mainly constituted by the q-axis current command value Iqref, and is mainly utilized in the case of executing the field-weakening control at a time when the motor comes into a high speed rotation, because the d-axis current command value Idref has a limit in the motor output. Accordingly, the d-axis current command value Idref is not generally outputted as far as the output torque and the angular velocity ω of the rotor are within the limit of the motor output. In other words, a relation "Idref = 0" is established. However, if the motor comes into the high speed rotation and reaches the limit of the motor output, it is necessary to execute the field-weakening control, the d-axis current command value Idref is not zero and a necessary value is outputted.

The d-axis current control mentioned above corresponds to a general used aspect, however, in addition, there is intended to prevent the output from being lowered by calculating the d-axis current command value obtained by taking the temperature into consideration, for preventing the motor output from being lowered on the basis of the temperature increase caused by the applied current, in Japanese Patent Application Laid-open No. 2000-1847663 A (patent document 1) and Japanese Patent Application Laid-open No. 2000-184773 A (patent document 2). Further, in Japanese Patent No. 3433701 B2 (patent document 3), in order to suppress a pulsation torque generated in the output torque of the motor, the q-axis current command value is corrected by using the vehicle speed V, the angular velocity ω, the rotor position θ and the like, and the motor is controlled by the corrected q-axis current command value.

In this case, in the motor control using the vector control mentioned above, in the case that the field-weakening control is executed at a time of the high speed rotation or the like, that is, in the case that the expression of the d-axis current command value "Idref = 0" is not established, there is a problem that the motor is vibrated and a noise is generated. It is considered that since a resistance and an inductance of motor windings are not uniform in each of the phases but have a dispersion, and a motor core has a dispersion in each of slots, a torque ripple is generated by executing the field-weakening control, so that the motor is vibrated and the noise is generated.

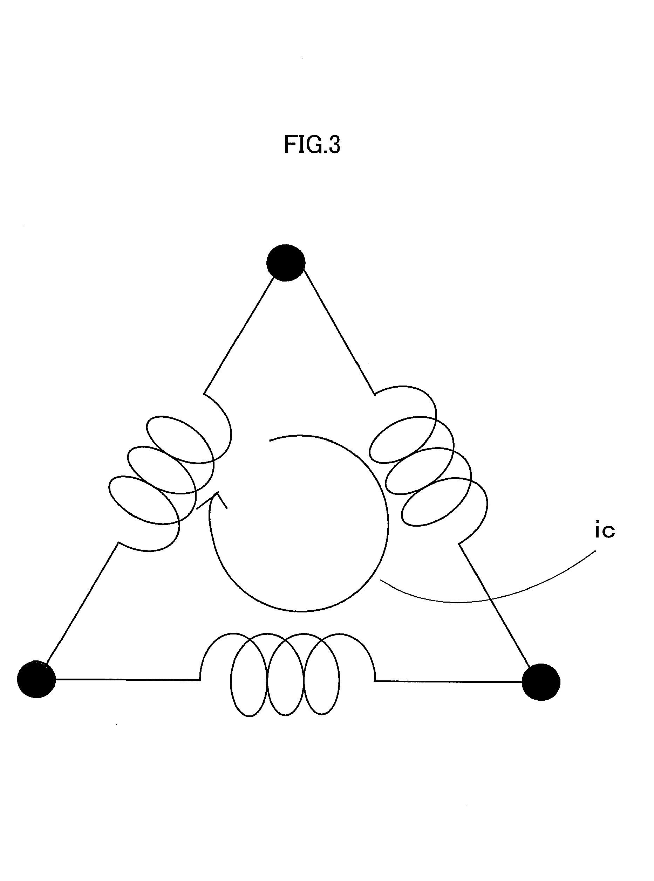

Further, in a delta(Δ)-connection type thee-phase brushless motor as shown in FIG. 3, a circulating current ic is generated by the resistance of the motor windings, the dispersion of the inductance and a tertiary high frequency wave included in a back EMF. Since the circulating current ic generates the torque ripple, it causes a sound and a vibration.

The countermeasures disclosed in the patent document 1 and the patent document 2 are provided for preventing the output generated by the temperature increase from being lowered, and do not improve the motion vibration and the noise mentioned above. Further, the countermeasure disclosed in the patent document 3 is not provided for preventing the motor vibration and the noise which are generated in the case of executing the field-weakening control, but is provided for suppressing the pulsation torque in a sensitive region subtly feeling an operation feeling of a steering wheel so as to prevent a steering feeling from being deteriorated. In the motor control using the vector control mentioned above, in the case of executing the field-weakening control at a time of the high speed rotation, that is, in the case that the expression of the d-axis current command value "Idref = 0" is not established, there is a problem that the motor is vibrated so as to generate the noise.

Further, in the delta-connection type three-phase brushless motor, there is a problem that the motor is vibrated by the torque ripple caused by the circulating current ic of the motor so as to generate the noise.

The present invention is made by taking the circumstances mentioned above into consideration, and an object of the present invention is to provide a control apparatus of an electric power steering apparatus which prevents a generation of a vibration and a noise of a motor on the basis of a torque ripple of the motor generated in the case of executing a field-weakening control, or a torque ripple of the motor caused by a motor circulating current.

### Disclosure of the Invention

The prevent invention relates to a control apparatus of an electric power steering apparatus which is provided with a motor applying a steering assist force against a steering system of a vehicle, and a current command value calculating means for calculating a q-axis current command value Iqref controlling an output torque of the motor and a d-axis current command value Idref controlling a magnetic field of the motor, and the object of the present invention can be achieved by installing a current command value correcting means for calculating a corrected q-axis current command value Iqc obtained by correcting the q-axis current command value Iqref on the basis of a rotor position θ of the motor, and controlling the motor on the basis of the corrected q-axis current command value Iqc.

Further, the object mentioned above of the present invention can be more effectively achieved by calculating the corrected q-axis current command value Iqc obtained by correcting the q-axis current command value Iqref on the basis of the rotor position θ of the motor and an angular velocity ω of the rotor, or calculating the corrected q-axis current command value Iqc obtained by correcting the q-axis current command value Iqref on the basis of the rotor position θ of the motor and the q-axis current value Iqref, or calculating the corrected q-axis current command value Iqc by adding a basic correcting current Ic previously determined by the rotor position θ to the q-axis current command value Iqref, by means of the current command value correcting means. Further, the object of the present invention can be more effectively achieved by calculating the corrected q-axis current command value Iqc by adding a compensated current value (Kw·Kd·Ic) obtained by multiplying a basic correcting current Ic previously determined by the rotor position θ by a coefficient Kw determined by the angular velocityω of the rotor to the q-axis current command value Iqref, or calculating the corrected q-axis current command value Iqc by adding a compensated current value (Kq·Kd·Ic) obtained by multiplying a basic correcting current Ic previously determined by the rotor position θ by a coefficient Kq determined by the q-axis current command value Iqref to the q-axis current command value Iqref, by means of the current command value correcting means.

Further, the object of the present invention can be achieved by constituting the current command value correcting means by a basic correcting current calculating means outputting a basic correcting current Ic previously determined by the rotor position θ, an encoding means determining and outputting a code of the q-axis current command value Iqref, and a first multiplying portion multiplying the basic correcting current Ic by a signal from the encoding means and adding to the q-axis current command value Iqref, or installing a coefficient calculating means calculating a coefficient Kw on the basis of the angular velocityω of the rotor, and a second multiplying portion multiplying the basic correcting current Ic by the coefficient Kω, and inputting an output (Kω·Ic) of the second multiplying portion to the first multiplying portion, or installing a spark advance portion advancing the angular velocityω, and an adding means adding an angular velocity advanced by the spark advance portion to the rotor position θ, and inputting an output of the adding means to the basic correcting current calculating means.

Further, the present invention relates to a control apparatus of an electric power steering apparatus which is provided with a motor applying a steering assist force to a steering system of a vehicle, and a current command value calculating means for calculating a q-axis current command value Iqref controlling an output torque of the motor and a d-axis current command value Idref controlling a magnetic field of the motor, and the object of the present invention can be achieved by installing a current command value correcting means for calculating a corrected q-axis current command value Iqc obtained by correcting the q-axis current command value Iqref on the basis of a rotor position θ of the motor and the d-axis current command value Idref, and controlling the motor on the basis of the corrected q-axis current command value Iqc.

### Brief Description of the Drawings

FIG. 1 is a schematic view of a general electric power steering apparatus;
FIG. 2 is a block diagram showing an example of a conventional vector control system in the electric power steering apparatus;
FIG. 3 is a view showing a state of a circulating current in a delta-connection type motor;
FIG. 4 is a block diagram showing a structure example (a field-weakening control) of a control apparatus to which the present invention is applied;
FIG. 5 is a block diagram showing an example of a current command value correcting means (a field-weakening control) in accordance with the present invention;
FIG. 6 is a block diagram showing an example of the current command value correcting means (the field-weakening control) taking an angular velocity into consideration in accordance with the present invention;
FIG. 7 is a block diagram showing an example of the current command value correcting means taking a magnitude of the q-axis current command value into consideration in accordance with the present invention;
FIG. 8 is a block diagram showing an example of an apparatus obtained by applying the present invention to a conventional vector control system;
FIG. 9 is a block diagram showing an example of the current command value correcting means (a circulating current) in accordance with the present invention; and
FIG. 10 is a block diagram showing a concrete example of the current command value correcting means (the circulating current).

### Best Mode for Carrying Out the Invention

A basic idea of the present invention is as follows.

First, in the case of executing a field-weakening control, since a relation between a rotor position θ and a wave form of a generated torque ripple is previously determined by a characteristic of a motor, a basic correcting current Ic canceling the torque ripple is previously determined with respect to the rotor position θ. Further, since a magnitude of the torque ripple becomes larger in accordance that a field weakening is stronger, that is, in accordance that the d-axis current command value is larger, a correcting q-axis current command value Iqc corresponding to a final q-axis current command value is calculated by adding a correcting current (Kd·Ic) obtained by multiplying the basic correcting current Ic by a coefficient Kd in correspondence to the magnitude of the d-axis current command value to the q-axis current command value Iqref.

Further, in the delta-connection type motor, since a circulating current is generated by a tertiary high frequency wave included in a back EMF, and the circulating current generates a torque ripple, it is necessary to correct. In accordance with the present invention, paying attention to the matter that a magnitude (an amplitude) of the circulating current forms a function of the angular velocityω, the angular velocity ω is multiplied by a correcting coefficient and is added to the current command value in the same direction.

### [Embodiment-1]

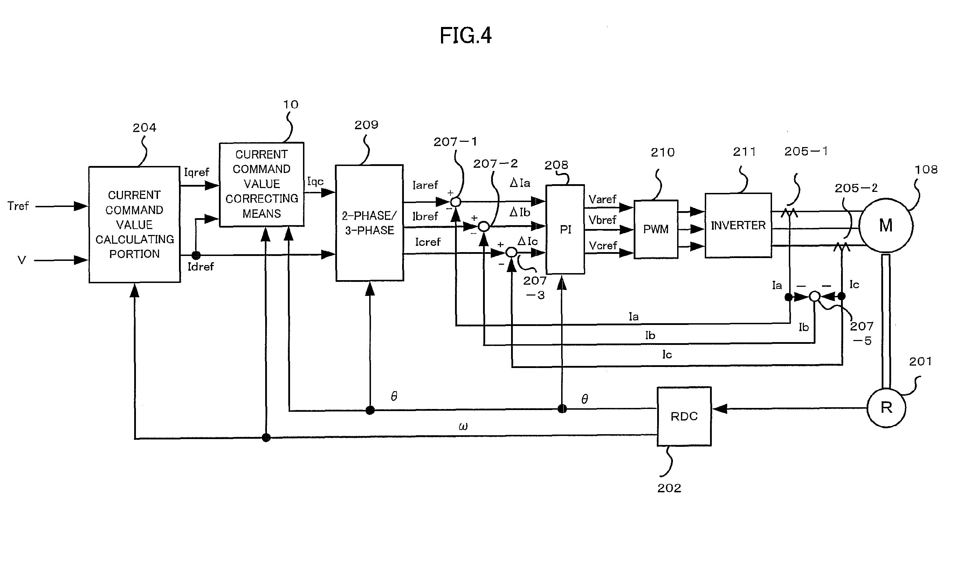

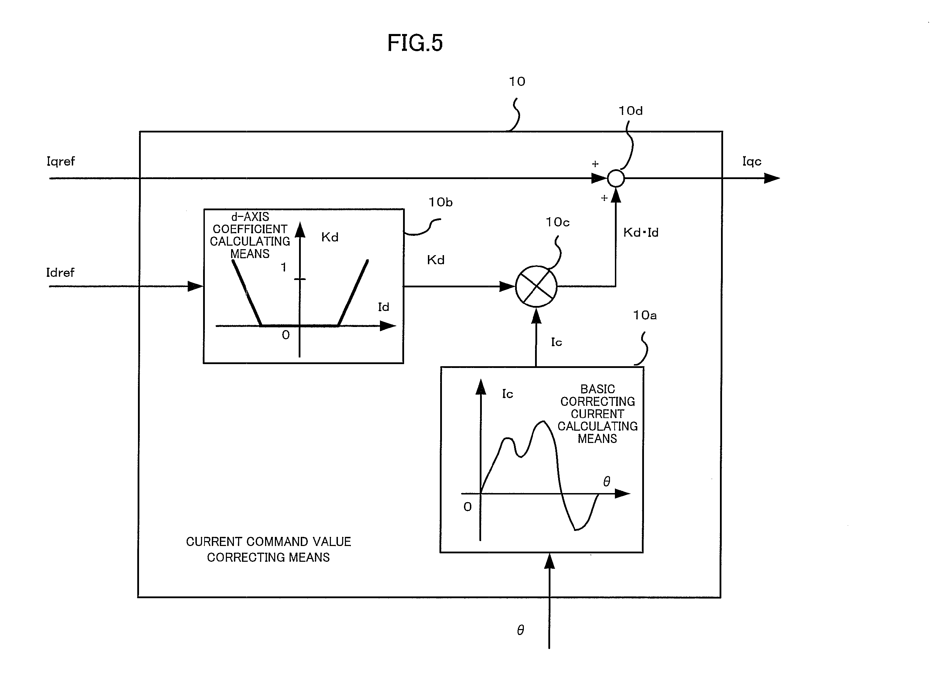

A description will be given of an embodiment 1 in accordance with the present invention with reference to FIGs. 4 and 5 on the basis of the idea mentioned above. FIG. 4 shows an entire structure of an electric power steering apparatus including a current command value correcting means 10 corresponding to a main portion of the present invention, and FIG. 5 is a block diagram showing a detail of a current command value correcting means 10 corresponding to a main portion of the present invention.

The vector control used in the present embodiment-1 is different from the conventional vector control mentioned above, and employs a control method of converting into the respective phase current command values after the d-axis current command value and the q-axis current command value are determined, and thereafter feedback controlling the motor currents in the respective phases. This vector control is called as a pseudo vector control (hereinafter, refer to as "PVC control"). In this case, the present invention can be applied not only to the PVC control system but also to the conventional vector control.

A description will be first given of a structure and an operation of the PVC control with reference to FIG. 4, and a description will be thereafter given of a structure and an operation of the current command value correcting means 10 with reference to FIG.5. In this case, the elements having the same reference numerals as those which have been already used have the same function.

The steering torque Tref detected by the torque sensor 107 so as to be inputted, the vehicle speed V detected by the vehicle speed sensor (not shown), the rotor position θ and the angular velocity ω of the rotor are inputted to the current command value calculating portion 204, and the q-axis current command value Iqref mainly controlling the output torque of the motor 108, and the d-axis current command value Idref mainly controlling the magnetic field of the motor 108 are calculated. Further, the q-axis current command value Iqref is inputted to the current command value correcting means 10, and is corrected, and thereafter, the corrected q-axis current command value Iqc is outputted. In this case, a description will be first given of an entire of the PCVC control, and a description will be later given in detail of the structure and the operation of the current command value correcting means 10 with reference to FIG. 5.

On the other hand, in order to execute the feedback control, it is necessary to detect the motor currents Ia, Ib and Ic in the respective phases. First, in order to respectively detect the a-phase current Ia and the c-phase current Ic, the current detectors 205-1 and 205-2 are arranged in the wirings between the inverter circuit 211 and the motor 108, and detect the currents Ia and Ic. Further, the b-phase current Ib is calculated as "Ib = - (Ia + Ic)" on the basis of the detected current Ia and Ic and the subtracting portion 207-5, by utilizing the relation of "Ia + Ib + Ic = 0".

Further, in order to control the motor 108, the resolver 201 detecting the rotor position θ of the motor 108 and the angular velocity ω of the rotor is arranged in the motor 108, and there is arranged the RDC circuit 202 detecting the rotor position θ and the angular velocity ω of the rotor from the output signal of the resolver 201.

The respective deviations ΔIa, ΔIb and ΔIc between the corrected q-axis current command value Iqc corresponding to the output of the current command value correcting means 10 and the d-axis current command value Idref, and the motor currents Ia, Ib and Ic in the respective phases are calculated in the subtracting portions 207-1, 207-2 and 207-3. The deviations ΔIa, ΔIb and ΔIc are inputted to the PI control portion 208, and the three-phase voltage command values Varef, Vbref and Vcref are calculated. In the case that the inverter circuit for driving the motor 108 is PWM-controlled, the respective phase PWM-control signals are outputted from the PWM control portion 210 on the basis of the input of the respective phase voltage command values Varef, Vbref and Vcref, and the inverter circuit 211 is PWM-controlled on the basis of the respective phase PWM-control signals.

A basic operation of the PVC control is as mentioned above. In this case, since the PVC control corresponds to the respective phase control including the current command value and the detected current, there is obtained an effect that it is possible to compensate independently in each of the phases as is different from the d/q axis current control even if the parameters such as the resistance of the motor, the inductance and the like are dispersed in the respective phases.

Next, a description will be given of a detail of the current command value correcting means 10 with reference to FIG. 5.

The current command value correcting means 10 is constituted by a basic correcting current calculating means 10a for outputting the basic correcting current Ic on the basis of the input of the rotor position θ, a d-axis coefficient calculating means 10b for outputting the coefficient Kd on the basis of the input of the d-axis current command value Idref, a multiplying portion 10c for multiplying on the basis of the input of the basic correcting current Ic and the coefficient Kd, and an adding portion 10d for adding the output (Kd·Ic) of the multiplying portion 10 to the q-axis current command value Iqref so as to output the corrected q-axis current command value Iqc. The basic corrected current calculating means 10a tables the relation between the rotor position θ and the basic corrected current Ic in accordance with an actual measurement. In other words, the rotor is rotated at a fixed speed, and the basic correcting current Ic canceling the torque ripple generated by the rotor position θ is actually measured and tabled. In this case, since the relation is changed in accordance with the property of the motor, it is necessary to actually measure in correspondence to the used motor.

Next, the d-axis coefficient calculating means 10b tables the magnitude of the d-axis current command value Idref and the d-axis coefficient Kd in accordance with the actual measurement in the same manner. In this case, FIG. 5 shows the example in which the d-axis current command value Idref has a dead zone near "0", however, the dead zone is not an essential condition of the present invention, but is devised such as to correct only in the case that the field-weakening is apparently executed.

In the case of using the current command value correcting means 10 having the structure mentioned above, the basic correcting current Ic canceling the torque ripple is determined by the basic correcting current calculating means 10a on the basis of the input of the rotor position θ outputted from the RDC circuit 202, and the corrected q-axis current command value Iqc is calculated by adding the corrected current (Kd·Ic) obtained by multiplying the basic correcting current Ic in the multiplying portion 10c by the d-axis coefficient Kd determined by the d-axis current command value Idref by the adding portion 10d, in proportion to the strength of the field-weakening current. It is possible to suppress the torque ripple determined in accordance with the rotor position θ and the magnitude of the d-axis current command value, on the basis of the corrected q-axis current command value Iqc. Accordingly, it is possible to suppress the vibration and the noise of the motor.

### [Embodiment-2]

The embodiment-1 mentioned above is the basics of the present invention, however, the present embodiment-2 is an improvement obtained by adding an element of an angular velocityω of the rotor to the embodiment-1. In other words, it has been known that the torque ripple generated at a time of the field-weakening control is more largely generated in accordance that the rotor turns at a higher speed. Accordingly, the corrected current (Kd·Ic) of the embodiment-1 is further regulated by the angular velocity ω.

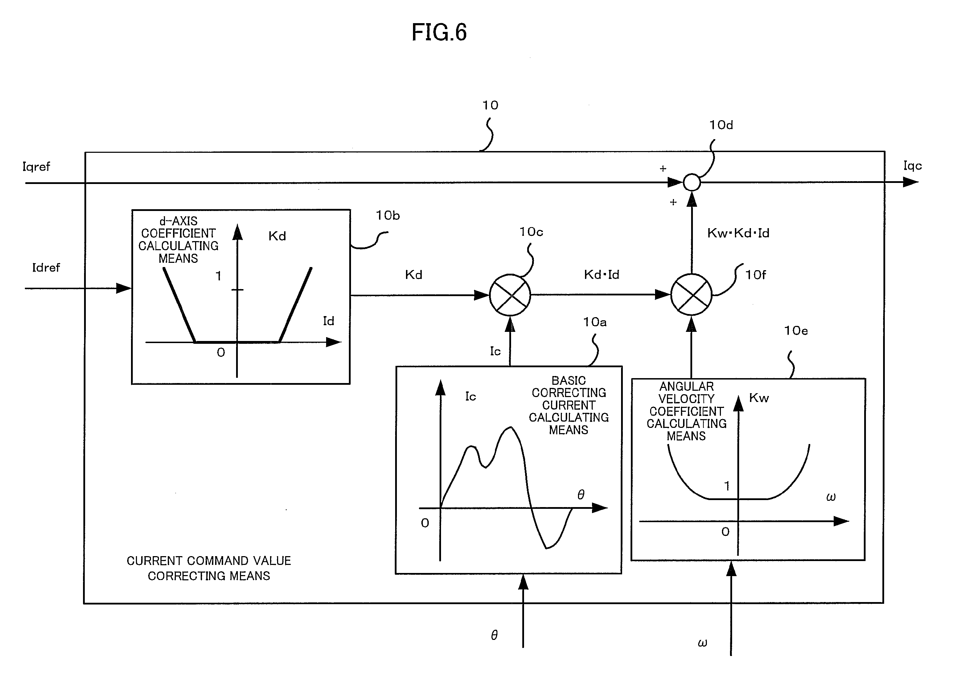

A description will be given of the present embodiment-2 with reference to FIG. 6.

The current command value correcting means 10 is constituted by the basic correcting current calculating means 10a for outputting the basic correcting current Ic by inputting the rotor position θ, the d-axis coefficient calculating means 10b for outputting the coefficient Kd by inputting the d-axis current command value Idref, the multiplying portion 10c for multiplying by inputting the basic correcting current Ic and the coefficient Kd, an angular velocity coefficient calculating means 10e for calculating a coefficient Kw by inputting the output (Kd·Ic) of the multiplying portion 10c and the angular velocity ω to the q-axis current command value Iqref, a multiplying portion 10f for multiplying the output (Kd·Ic) of the multiplying portion 10c by the coefficient Kw, and the adding portion 10d for adding the q-axis current command value Iqref to the output of the multiplying portion 10f (Kw·Kd·Ic) so as to output the corrected q-axis current command value Iqc.

A relation between the angular velocity ω and the coefficient Kw indicated by the angular velocity coefficient calculating means 10e is determined by an actual measurement. The relation is changed by a characteristic of the motor. The coefficient is "1" at a time of a low speed rotation, and a value equal to or more than "1" is determined in accordance that the rotating speed becomes higher. In other words, because the torque ripple is generated larger, whereby it is necessary to make the correcting current for suppressing larger.

In the current command value correcting means 10 structured as mentioned above, the correcting current (Kw·Kd·Ic) is calculated by multiplying the correcting current (Kd·Ic) corresponding to the output of the multiplying portion 10c described in the embodiment-1 by the coefficient Kw determined by the angular velocity ω calculated by the angular velocity coefficient calculating means 10e by the multiplying portion 10f, and the corrected q-axis current command value Iqc is calculated by adding it to the q-axis current command value Iqref by the adding portion 10d. In other words, there is taken a step to suppress the increase of the torque ripple caused by the angular velocity ω in addition to the correcting current (Kd·Ic) of the embodiment-1. Accordingly, it is possible to more effectively suppress the vibration and the noise of the motor.

### [Embodiment-3]

The embodiment-1 is the basics of the present invention as mentioned above, however, the present embodiment-3 is an improvement obtained by adding an element of the q-axis current command value Iqref itself to the embodiment-1. In other words, it has been known that the torque ripple generated at a time of the field-weakening control is more largely generated in accordance that the q-axis current command value Iqref itself corresponding to the torque command value becomes larger. Accordingly, the corrected current (Kd·Ic) of the embodiment-1 is further regulated the corrected current(Kd·Ic)by the q-axis current command value Iqref.

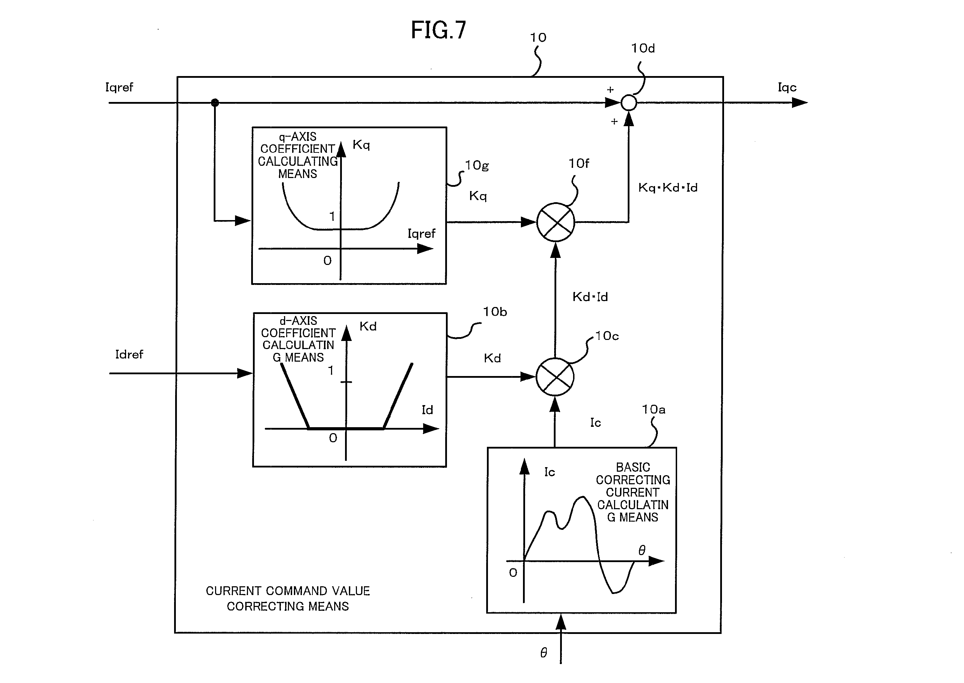

A description will be given of the present embodiment-3 with reference to FIG. 7.

The current command value correcting means 10 is constituted by the basic correcting current calculating means 10a for outputting the basic correcting current Ic by inputting the rotor position θ, the d-axis coefficient calculating means 10b for outputting the coefficient Kd by inputting the d-axis current command value Idref, the multiplying portion 10c for multiplying by inputting the basic correcting current Ic and the coefficient Kd, a q-axis coefficient calculating means 10g for calculating the coefficient Kq by inputting the output (Kd·Ic) of the multiplying portion 10c and the q-axis current command value Iqref to the q-axis current command value Iqref, the multiplying portion 10f for multiplying the output (Kd·Ic) of the multiplying portion 10c by the coefficient Kq, and the adding portion 10d for adding the q-axis current command value Iqref to the correcting current (Kq·Kd·Ic) corresponding to the output of the multiplying portion 10f so as to output the corrected q-axis current command value Iqc.

A relation between the q-axis current command value Iqref and the coefficient Kq indicated by the q-axis coefficient calculating means 10g is determined by an actual measurement. The relation is changed by the characteristic of the motor. A value equal to or more than "1" is determined as the coefficient in accordance that the q-axis current command value Iqref becomes higher.

In the current command value correcting means 10 structured as mentioned above, the correcting current (Kq·Kd·Ic) is calculated by multiplying the correcting current (Kd·Ic) corresponding to the output of the multiplying portion 10c described in the embodiment-1 by the coefficient Kq determined by the q-axis current command value Iqref calculated by the q-axis coefficient calculating means 10g by the multiplying portion 10f, and the corrected q-axis current command value Iqc is calculated by adding it to the q-axis current command value Iqref by the adding portion 10d. In other words, there is taken a step to suppress the increase of the torque ripple caused by the magnitude of the q-axis current command value Iqref in addition to the correcting current (Kd·Ic) of the embodiment-1. Accordingly, it is possible to more effectively suppress the vibration and the noise of the motor.

### [Embodiment-4]

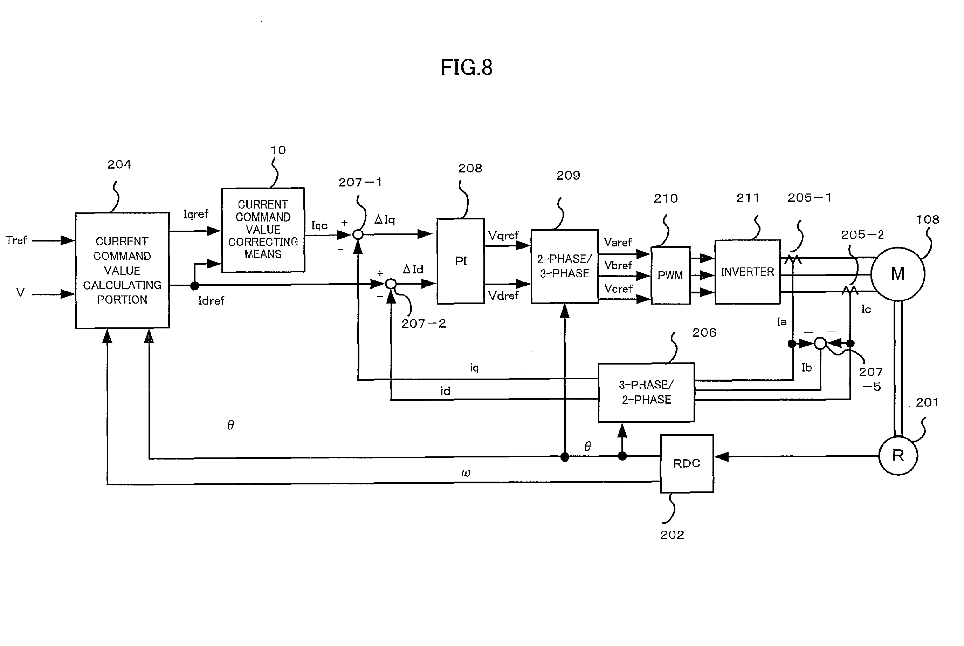

The present invention can be applied not only to the PVC control mentioned above, but also to the electric power steering apparatus of the conventional vector control. FIG. 8 is a control block diagram of a structure in which the present invention is applied to the conventional vector control.

The elements having the same reference numerals as those used in the description of the prior art have the same functions. This embodiment-4 is different from the conventional vector control in a point that the current command value correcting means 10 is arranged between the current command value calculating portion 204 and the subtracting portion 207-1, and the q-axis current command value Iqref calculated by the current command value calculating portion 204 is first inputted to the current command value correcting means 10, is calculated and outputted as the corrected q-axis current command value Iqc, and is inputted to the subtracting portion 207-1.

In accordance with the structure mentioned above, it is possible to obtain the same effects as those described in the embodiments-1, -2 and -3, and it is possible to suppress the vibration and the noise of the motor.

### [Embodiment-5]

In this case, a back EMF wave form of the motor is designed to be constituted by a sine wave (only a primary component), however, a certain degree of harmonic content is included. Further, in a delta-connection type three-phase brushless motor, a tertiary circulating current is generated by a tertiary high frequency wave included in the back EMF, and the circulating current generates a torque ripple (a sextic component). In this case, since the circulating path does not exist in a star(Y)-connection type motor, the circulating current does not flow.

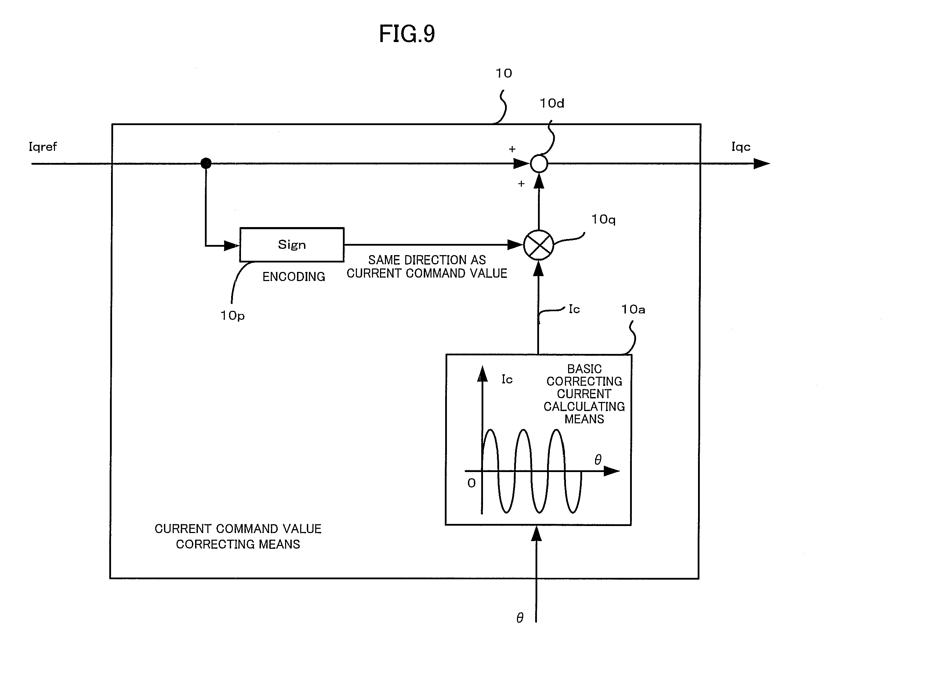

It is possible to actually measure and correct the torque ripple generated by the circulating current in the same manner as the embodiment mentioned above. FIG. 9 shows a basic structure of the same. Since the torque ripple is a function of an electrical angle (a rotor position) θ, a signal having a code (a direction) of the q-axis current command value Iqref is acquired by an encoding means 10p and is multiplied by the basic correcting current Ic from the basic correcting current calculating means 10a by the multiplying portion 10q, and a result of the multiplication, that is, the correcting value in correspondence to the electrical angle θ is added to the q-axis current command value Iqref by the adder 10d. The code of the correcting value is the same as the current command value, and the correcting value may be determined in accordance with an experiment, or may be determined in accordance with a simulation.

In this case, the circulating current of the delta-connection type motor flows by the harmonic content of the back EMF, and the back EMF comes to a function (= Ke·ω) of the angular velocity ω. Accordingly, a magnitude (an amplitude) of the circulating current comes to a function of the angular velocity ω. By being multiplied by the correcting coefficient relating to the angular velocityω determined in accordance with the experiment, the correction of the circulating current is more properly executed, and it is possible to reduce the torque ripple.

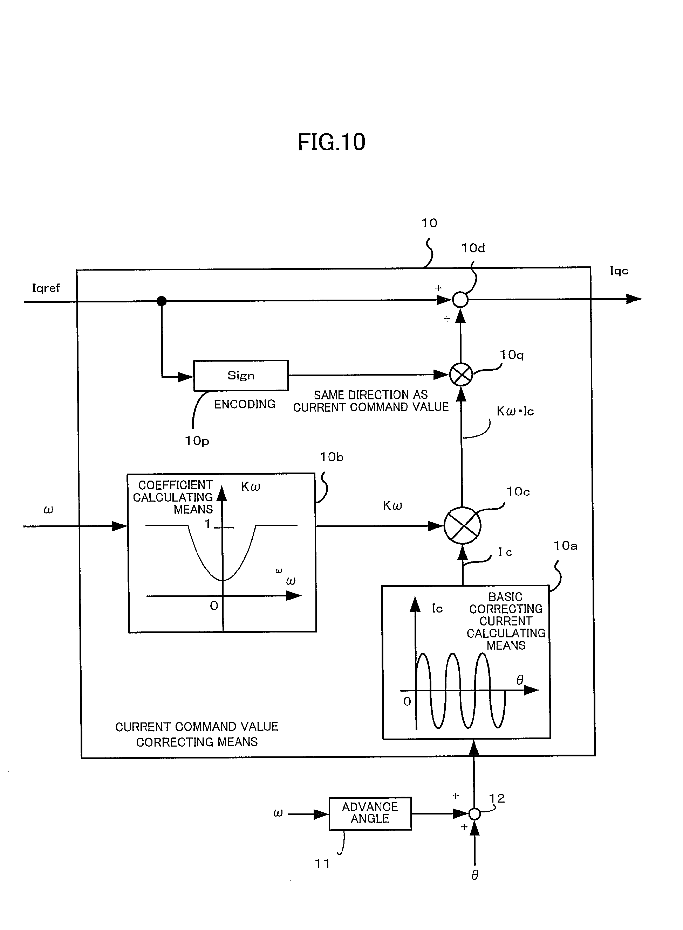

FIG. 10 shows an example of a structure thereof. In this structure, the angular velocityω is multiplied by the coefficient by means of the coefficient calculating means 10b, the basic correcting current Ic from the basic correcting current calculating means 10a is multiplied by means of the multiplying portion 10c, and the result of multiplication is further multiplied by the signal from the encoding means 10p by means of the multiplying portion 10q. In this case, in the present embodiment-5, taking a delay of the sampling into consideration, the angular velocity ω is advanced by an advance angle portion 11, and the electrical angle θ is advanced by an adding portion 12.

In accordance with the present embodiment-5, since the correcting value in correspondence to the electrical angle θ is added to the current command value in the same direction, it is possible to correct the torque ripple based on the circulating current of the delta-connection type motor coming to the function of the angular velocity ω. Further, the correction of the circulating current is properly executed by multiplying the correcting coefficient relating to the angular velocity ω determined in accordance with the experiment, and it is possible to compensate the delay of the sampling on the data process by adding the advance angle of the angular velocityω to the electrical angle θ.

In this case, the above description is given of the case of controlling the electric power steering apparatus by using the feedback control system, however, it goes without saying that the same effect can be obtained by applying the present invention to a feedforward control system. Further, the same effect can be obtained in a multi-phase motor having three or more phases, in addition to the three-phase motor.

As mentioned above, by using the present invention, in the control of the electric power steering apparatus, it is possible to suppress the vibration and the noise of the motor caused by the torque ripple generated in the case of executing the field-weakening control or the torque ripple based on the circulating current of the delta-connection type motor.

In accordance with the present invention, in the case of executing the field-weakening control, since the wave form of the generated torque ripple is determined in accordance with the rotor position in each of the characteristics of the motor, the basic correcting current is previously determined for canceling the torque ripple in correspondence to the rotor position. Further, since the torque ripple becomes larger in accordance that the d-axis current of the field-weakening control is larger, the motor is controlled on the basis of the corrected q-axis current command value Iqc obtained by adding the correcting current in which the magnitude is regulated by multiplying the determined basic correcting current by the magnitude of the d-axis current command value Idref to the q-axis current command value Iqref. Accordingly, the torque ripple is suppressed. Therefore, it is possible to obtain an effect of suppressing the vibration and the noise of the motor.

Further, in accordance with the present invention, since the torque ripple is affected by the angular velocity ω of the rotor, and the motor is controlled on the basis of the corrected q-axis current command value Iqc obtained by adding the correcting current obtained by multiplying the correcting current determined in accordance with the d-axis current command value Idref by the magnitude of the angular velocity to the q-axis current command value Iqref, the torque ripple is suppressed. As a result, it is possible to suppress the vibration and the noise of the motor.

Further, since the torque ripple is affected by the magnitude of the q-axis current command value Iqref, and the torque ripple becomes larger in accordance that the q-axis current command value is larger, the motor is controlled on the basis of the corrected q-axis current command value Iqc obtained by adding the correcting current obtained by multiplying the correcting current determined in accordance with the rotor position mentioned above and the d-axis current command value by the magnitude of the q-axis current command value to the q-axis current command value. Accordingly, the torque ripple is suppressed. Therefore, it is possible to suppress the vibration and the noise of the motor.

### Industrial Applicability

In accordance with the present invention, since it is possible to suppress the vibration and the noise of the motor caused by the torque ripple generated in the case of executing the field-weakening control, or the torque ripple based on the circulating current of the delta-connection type motor, it is possible to provide the electric power steering apparatus having the high performance for the motor vehicle and the vehicle.

## Claims

1. A control apparatus of an electric power steering apparatus comprising:
a motor applying a steering assist force to a steering system of a vehicle; and
a current command value calculating means for calculating a q-axis current command value Iqref controlling an output torque of the motor and a d-axis current command value Idref controlling a magnetic field of the motor,
wherein the control apparatus is provided with a current command value correcting means for calculating a corrected q-axis current command value Iqc obtained by correcting the q-axis current command value Iqref on the basis of a rotor position θ of the motor, and controls the motor on the basis of the corrected q-axis current command value Iqc.

2. A control apparatus of an electric power steering apparatus as claimed in claim 1, wherein the current command value correcting means calculates the corrected q-axis current command value Iqc obtained by correcting the q-axis current command value Iqref on the basis of the rotor position θ of the motor and an angular velocity ω of the rotor.

3. A control apparatus of an electric power steering apparatus as claimed in claim 1, wherein the current command value correcting means calculates the corrected q-axis current command value Iqc obtained by correcting the q-axis current command value Iqref on the basis of the rotor position θ of the motor and the q-axis current value Iqref.

4. A control apparatus of an electric power steering apparatus as claimed in claim 1, wherein the current command value correcting means calculates the corrected q-axis current command value Iqc by adding a basic correcting current Ic previously determined by the rotor position θ to the q-axis current command value Iqref.

5. A control apparatus of an electric power steering apparatus as claimed in claim 2, wherein the current command value correcting means calculates the corrected q-axis current command value Iqc by adding a compensated current value (Kw·Kd·Ic) obtained by multiplying a basic correcting current Ic previously determined by the rotor position θ by a coefficient Kw determined by the angular velocity ω of the rotor to the q-axis current command value Iqref.

6. A control apparatus of an electric power steering apparatus as claimed in claim 3, wherein the current command value correcting means calculates the corrected q-axis current command value Iqc by adding a compensated current value (Kq·Kd·Ic) obtained by multiplying a basic correcting current Ic previously determined by the rotor position θ by a coefficient Kq determined by the q-axis current command value Iqref to the q-axis current command value Iqref.

7. A control apparatus of an electric power steering apparatus as claimed in claim 1, wherein the current command value correcting means is constituted by a basic correcting current calculating means outputting a basic correcting current Ic previously determined by the rotor position θ, an encoding means determining and outputting a code of the q-axis current command value Iqref, and a first multiplying portion multiplying the basic correcting current Ic by a signal from the encoding means and adding to the q-axis current command value Iqref.

8. A control apparatus of an electric power steering apparatus as claimed in claim 7, wherein the control apparatus is provided with a coefficient calculating means calculating a coefficient Kw on the basis of the angular velocity ω of the rotor, and a second multiplying portion multiplying the basic correcting current Ic by the coefficient Kω, and inputs an output (Kω·Ic) of the second multiplying portion to the first multiplying portion.

9. A control apparatus of an electric power steering apparatus as claimed in claim 7 or 8, wherein the control apparatus is provided with a spark advance portion advancing the angular velocity ω, and an adding means adding an angular velocity advanced by the spark advance portion to the rotor position θ, and inputs an output of the adding means to the basic correcting current calculating means.

10. A control apparatus of an electric power steering apparatus comprising:
a motor applying a steering assist force to a steering system of a vehicle; and
a current command value calculating means for calculating a q-axis current command value Iqref controlling an output torque of the motor and a d-axis current command value Idref controlling a magnetic field of the motor,
wherein the control apparatus is provided with a current command value correcting means for calculating a corrected q-axis current command value Iqc obtained by correcting the q-axis current command value Iqref on the basis of a rotor position θ of the motor and the d-axis current command value Idref, and controls the motor on the basis of the corrected q-axis current command value Iqc.

11. A control apparatus of an electric power steering apparatus as claimed in claim 10, wherein the current command value correcting means calculates the corrected q-axis current command value Iqc obtained by correcting the q-axis current command value Iqref on the basis of the rotor position θ of the motor, the d-axis current command value Idref and an angular velocity ω of the rotor.

12. A control apparatus of an electric power steering apparatus as claimed in claim 10, wherein the current command value correcting means calculates the corrected q-axis current command value Iqc obtained by correcting the q-axis current command value Iqref on the basis of the rotor position θ of the motor, the d-axis current command value Idref and the q-axis current value Iqref.

13. A control apparatus of an electric power steering apparatus as claimed in claim 10, wherein the current command value correcting means calculates the corrected q-axis current command value Iqc by adding a compensating current value (Kd·Ic) obtained by multiplying a basic correcting current Ic previously determined by the rotor position θ by a coefficient Kd determined by the d-axis current command value Idref to the q-axis current command value Iqref.

14. A control apparatus of an electric power steering apparatus as claimed in claim 11, wherein the current command value correcting means calculates the corrected q-axis current command value Iqc by adding a compensated current value (Kw·Kd·Ic) obtained by multiplying a compensating current value (Kd·Ic) obtained by multiplying a basic correcting current Ic previously determined by the rotor position θ by a coefficient Kd previously determined by the d-axis current command value Idref, by a coefficient Kw determined by the angular velocity ω of the rotor to the q-axis current command value Iqref.

15. A control apparatus of an electric power steering apparatus as claimed in claim 12, wherein the current command value correcting means calculates the corrected q-axis current command value Iqc by adding a compensated current value (Kq·Kd·Ic) obtained by multiplying a compensating current value (Kd·Ic) obtained by multiplying a basic correcting current Ic previously determined by the rotor position θ by a coefficient Kd determined by the d-axis current command value Idref, by a coefficient Kq determined by the q-axis current command value Iqref to the q-axis current command value Iqref.
